# EUROPÄISCHE PATENTSCHRIFT

(11) **EP 0 387 394 B1**
(45) Veröffentlichungstag und Bekanntmachung des Hinweises auf die Patenterteilung: **15.12.1993**
(21) Anmeldenummer: 89114290.3
(22) Anmeldetag: 02.08.1989
(51) Int. Cl.: B01D 53/36, B01J 35/06, F01N 3/28, F01N 3/02, B01D 39/08

(54) **Verfahren zur Herstellung eines Filter- oder Katalysatorkörpers**
Process for manufacturing the body of a filter or a catalyst
Procédé pour la fabrication du corps d'un filtre ou d'un catalyseur

(30) Priorität: 16.03.1989 DE 3908581
(43) Veröffentlichungstag der Anmeldung: 19.09.1990
(73) Patentinhaber: Schwäbische Hüttenwerke Gesellschaft mit beschränkter Haftung, D-73414 Aalen (DE)
(72) Erfinder: Härle, Hans A., Dipl.-Ing., D-7085 Bopfingen (DE)
(74) Vertreter: Lorenz, Werner, Dipl.-Ing.

(56) Entgegenhaltungen:
- WO-A-87/01610
- DE-A- 2 626 597
- FR-A- 2 462 188

## Beschreibung

Die Erfindung betrifft ein Verfahren zur Herstellung eines Filter- oder Katalysatorkörpers aus mehrlagigen Geweben und/oder Gestricken und/oder faserigem Material, die zusammengesintert sind und danach hergestellte Filter- oder Katalysatorkörper.

Bekannt sind bereits Filter bzw. Katalysatorkörper, die aus mehreren Schichten bzw. Lagen von Geweben und Gestricken aus Metallfasern oder Metalldrähten bestehen, welche zusammengesintert worden sind. Das Sintern erfolgt dabei in der Regel in einem Ofen unter Druck und bei entsprechend hoher Temperatur.

Filter dieser Art werden als sogenannte Tiefbettfilter eingesetzt, wobei die Abscheidung des zu filternden Mediums an den Oberflächen der mehrlagigen Geweben oder Gestricken bzw. deren Bestandteile erfolgt. Die Wirksamkeit des Filters wird dabei u.a. durch die zur Verfügung stehende Oberfläche begrenzt.

Ein Katalysator braucht zu dessen Wirksamkeit ebenfalls große Oberflächen, um einen Elektronenaustausch stattfinden zu lassen.

Ein hauptsächliches Einsatzgebiet von Katalysatoren sind Verbrennungsmotore bei Kraftfahrzeugen. Mit den bekannten Katalysatoren sollen Umwelt- und gesundheitsschädliche Bestandteile, z.B. Kohlenmonoxyd, Kohlenwasserstoffe und Stickoxyde, aus dem Abgas entfernt werden. Hierzu sind die Katalysatoren mit entsprechend katalytisch wirkenden Werkstoffen versehen, wie z.B. Platin, Rhodium oder Vanadium.

In der DE-A-26 26 597 ist ein Verfahren zur Herstellung eines Katalysators beschrieben, bei dem die Oberfläche eines Materials durch Aufbringen geeigneter kleiner Partikel vergrößert wird. Der Katalysatorkörper ist dabei aus einer Skelettstruktur gebildet, die einen einlagigen Körper darstellt.

In der US-A-2 267 918 ist ein mehrlagiger Filterkörper beschrieben, in den pulverförmige Partikel gesintert sind. Dabei wird vorgeschlagen, zwei Lagen unterschiedlich dichten Filtermaterials zu vereinen.

Bekannt sind auch Rußfilter für Dieselmotore, welche zumeist aus keramischem Werkstoff bestehen. Die heißen Motorabgase werden durch den keramischen Filterkörper geleitet, wobei in den porösen Kanälen zusammen mit den herrschenden hohen Temperaturen, der Ruß, d.h. Kohlenstoff, in den Filterwänden in Gas und Asche umgewandelt wird. Anstelle von keramischen Filterkörpern sind auch bereits Filterkörper hierfür aus Sintermaterial vorgeschlagen worden.

Bekannte Systeme haben den Nachteil, daß deren Abscheideflächen beschränkt sind. Aus diesem Grunde sind relativ viel Lagen aus dicken Gewebe- oder Gestrickeschichten notwendig, wobei die Dicken je nach Anwendungsfall zwischen einigen Millimetern und Metern betragen können.

Der vorliegenden Erfindung liegt die Aufgabe zugrunde die Abscheidewirkung eines Filter- oder Katalysatorkörpers zu erhöhen, insbesondere gezielte Filter- oder Katalysatorwirkungen zu erzielen.

Erfindungsgemäß wird diese Aufgabe durch die in Anspruch 1 genannten Merkmale gelöst.

Durch das erfindungsgemäße Verfahren wird eine mehrfache Oberflächenvergrößerung erreicht, wodurch eine vielfach größere Adsorptionsfläche und damit eine wesentlich größere Abscheidefläche zur Verfügung steht. Dies bedeutet, daß man bei gleicher Filterleistung die Dicke der Filterlagen deutlich reduzieren kann.

Durch die erfindungsgemäßen Merkmale ist es möglich, einen Filter- oder Katalysatorkörper zu schaffen, der optimal auf den jeweiligen Einsatzfall einstellbar bzw. auf diesen abstellbar ist. So lassen sich damit z.B. örtlich gezielte Wirkungen erreichen oder z.B. ganze Abschnitte oder Bereiche des Filter- oder Katalysatorkörpers teilweise oder völlig flüssigkeits- oder gasdicht ausbilden.

Ein weiterer Vorteil liegt darin, daß Filter- oder Katalysatorkörper, die nach dem erfindungsgemäßen Verfahren hergestellt sind eine gute Durchströmbarkeit bei relativ geringen Herstellkosten aufweisen. Dies ist besonders bei einem Einsatz bei Verbrennungsmotoren in Fahrzeugen von Vorteil, da dadurch die Leistungsverluste geringer werden.

Beim Stand der Technik berühren sich im allgemeinen die Bestandteile, im allgemeinen Drähte, der einzelnen Lagen nur, bzw. kommt es praktisch nur zu punktweisen Versinterungen. Erfindungsgemäß werden sie nun mit den Partikeln oder Spänen bzw. Drahtstücken und auch untereinander versintert, wodurch sich eine größere Berührungsfläche und damit auch eine größere Festigkeit ergibt.

Dies bedeutet, daß gegebenenfalls auf andere Maßnahmen zur Erhöhung der Festigkeit des Filter- oder Katalysatorkörpers verzichtet werden kann.

In vorteilhafter Weise wird man die einzelnen Lagen zusammen mit der Aufsinterung der Partikel, Späne oder Drahtstücke miteinander in einem Arbeitsgang versintern. Auf diese Weise kann die Herstellung des erfindungsgemäßen Filter- oder Katalysatorkörpers in einem Sinterarbeitsgang erfolgen.

Für die Einbringung der Partikel, Späne oder Drahtstücke bzw. dessen Verteilung in den Geweben, Gestricken oder in dem fasrigen Material sind die verschiedensten Maßnahmen möglich.

Eine vorteilhafte und sehr wirkungsvolle Lösung, welche mit geringem Aufwand durchführbar ist, besteht darin, daß die Gewebe, Gestricke oder das fasrige Material mit einer klebrigen Flüssigkeit überzogen, anschließend mit den Partikeln, Spänen oder Drahtstücken dotiert und abschließend gesintert werden.

Als klebrige Flüssigkeit kann z.B. Öl verwendet werden, wobei eine entsprechende Verteilung der Teile durch z.B. ein Einrütteln erfolgen kann. Die klebrige Flüssigkeit sorgt dabei für die Haftung der Teile in dem Gewebe, Gestrick oder dem fasrigen Material vor dem Sintervorgang.

Alternativ hierzu oder in Kombination kann auch vorgesehen sein, daß die Gewebe, Gestricke oder das fasrige Material elektrisch und/oder magnetisch aufgeladen werden und anschließend mit Partikeln, Spänen oder Drahtstücken dotiert werden.

Selbstverständlich ist auch im Rahmen der Erfindung die umgekehrte Maßnahme möglich, d.h., daß die Partikel, Späne oder Drahtstücke aufgeladen werden.

Voraussetzung hierfür ist selbstverständlich, daß die verwendeten Teile entsprechend elektrisch leitfähig bzw. magnetisierbar oder magnetisch sind.

Eine andere Möglichkeit die Partikel o.dgl. auf die Gewebe, Gestricke oder das fasrige Material aufzubringen besteht in einem Siebdrucken auf die einzelnen Lagen. Durch das Siebdruck- oder ein ähnliches Verfahren lassen sich genaue Abgrenzungen der mit den Partikeln beschichteten Teile von den übrigen Bereichen erreichen. Auf diese Weise lassen sich örtlich gezielte Wirkungen erreichen.

Die Gewebe, Gestricke oder das fasrige Material können aus den verschiedensten Materialien bestehen, wie z.B. Metall, Kunststoff oder aus keramischen Stoffen. Ebenso sind auch Kombinationen daraus denkbar.

Gleiches gilt für die Partikel, Späne oder Drahtstücke, die sowohl aus Metall, aus Kunststoff oder aus keramischen Stoffen oder auch aus Mischungen daraus bestehen können.

Deren Verwendung richtet sich nach dem jeweiligen Einsatzfall.

Bei einem Einsatz als Katalysatorkörper wird man Materialien verwenden oder hinzufügen, die katalytische Eigenschaften besitzen, wie z.B. Platin, Rhodium oder Vanadium.

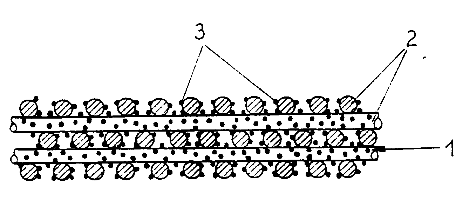

Nachfolgend ist ein Ausführungsbeispiel der Erfindung anhand der Zeichnung prinzipmäßig beschrieben.

Ein Gewebe oder Gestrick besteht aus mehreren Lagen 1 von jeweils miteinander verflochtenen, verwirkten oder verstrickten Bestandteilen, im allgemeinen Drähten 2.

Ein derartiges Gewebe oder Gestrick wird mit einer klebrigen Flüssigkeit überzogen bzw. durchtränkt, wonach Partikel 3 durch Einrütteln in das Innere gebracht und durch den Rüttelvorgang entsprechend dort verteilt werden. Dabei übernimmt die klebrige Flüssigkeit die Haftung bzw. Lagefixierung. Anschließend erfolgt ein Sintervorgang, welcher in üblicher Weise in Abhängigkeit von den beteiligten Materialien durchgeführt wird und allgemein bekannt ist, weshalb dieser nachfolgend näher nicht beschrieben wird.

Durch den Sintervorgang werden sowohl die einzelnen Lagen 1 mit ihren Drähten 2 als auch die Partikel 3 miteinander versintert und bilden auf diese Weise eine Einheit.

In der Praxis wurde festgestellt, daß durch einen Katalysator, der entsprechend mit katalytisch wirkenden Materialien versehen oder damit beschichtet ist, bereits bei relativ niedrigen Temperaturen im Vergleich zum Stand der Technik, eine katalytische Wirkung auftritt. Dies bedeutet, daß gerade während des Anfahrbereiches eine entsprechend hohe Wirkung erzielt wird. Weiterhin wurde festgestellt, daß mit dem erfindungsgemäßen Katalysatorkörper nahezu 90% der hochgiftigen Stoffe ausgeschieden werden können. Dies gilt z.B. für polyzyklische Kohlenwasserstoffe.

Durch eine Mischung von Metallteilen und keramischen Stoffen läßt sich eine hohe Hitzebeständigkeit erreichen, wobei lediglich darauf zu achten ist, daß für einen weitgehend gleichen Wärmeausdehnungskoeffizienten besitzen.

Durch eine entsprechende Steuerung der Dotierung bzw. Einbringung der Partikel, Späne oder Drahtstücke oder Mischungen daraus, lassen sich auch Filter- oder Katalysatorkörper unterschiedlicher Porosität und damit unterschiedlichem Durchflußwiderstand herstellen. Ebenso ist es möglich ggf. ganze Abschnitte oder Bereiche des Filter- oder Katalysatorkörpers völlig flüssigkeits- oder gasdicht auszubilden.

## Patentansprüche

1. Verfahren zur Herstellung eines Filter- oder Katalysatorkörpers aus zusammengesintertem Material, wobei auf das Material pulverförmige oder körnige-Partikel (3) aufgesintert sind, wobei der Filter- oder Katalysatorkörper aus mehrlagigen Geweben und/oder Gestricken und/oder fasrigem Material und/oder Draht gebildet wird, wobei auf die einzelnen Lagen (1) oder deren Bestandteile (2) die pulverförmigen oder körnigen Partikel oder Späne, Drahtstücke oder Mischungen davon (3) aufgesintert werden, und wobei die Dotierung der einzelnen Lagen mit den pulverförmigen oder körnigen Partikeln, oder mit den Spänen, Drahtstücken oder Mischungen davon derart gezielt erfolgt, daß sich damit ein Filter- oder Katalysatorkörper unterschiedlicher Porosität und damit mit unterschiedlichem Durchflußwiderstand herstellen läßt.

2. Verfahren nach Anspruch 1,
**dadurch gekennzeichnet,** daß die einzelnen Lagen (1) zusammen mit der Aufsinterung der Partikel, der Späne oder der Drahtstücke (3) in einem Arbeitsgang miteinander versintert werden.

3. Verfahren nach Anspruch 1 oder 2,
**dadurch gekennzeichnet,** daß die Gewebe, Gestricke oder das fasrige Material (1) mit einer klebrigen Flüssigkeit überzogen, anschließend mit den Partikeln, Spänen oder Drahtstücken (3) dotiert und abschließend gesintert werden.

4. Verfahren nach einem der Ansprüche 1 bis 3,
**dadurch gekennzeichnet,** daß die Partikel, Späne oder Drahtstücke (3) in die Gewebe, Gestricke oder in das fasrige Material (1) eingerüttelt werden.

5. Verfahren nach einem der Ansprüche 1 bis 4,
**dadurch gekennzeichnet,** daß die Gewebe, Gestricke oder das fasrige Material (1) elektrisch und/oder magnetisch aufgeladen werden und anschließend mit Partikeln, Spänen oder Drahtstücken (3) dotiert werden.

6. Verfahren nach Anspruch 1 oder 2,
**dadurch gekennzeichnet,** daß die Partikel, Späne oder Drahtstücke (3) durch Siebdrucken auf die einzelnen Lagen (1) aufgebracht werden.

7. Verfahren nach einem der Ansprüche 1 bis 6,
**dadurch gekennzeichnet,** daß für die Gewebe, Gestricke oder das fasrige Material (1) Metall, Kunststoff oder Keramik oder eine Kombination aus diesen Materialien verwendet wird.

8. Verfahren nach einem der Ansprüche 1 bis 7,
**dadurch gekennzeichnet,** daß als Partikel, Späne oder Drahtstücke (3), Metalle, Kunststoffe, keramische Stoffe oder Mischungen daraus verwendet werden.

9. Filter- oder Katalysatorkörper, der mehrere miteinander versinterte Lagen von Geweben, Gestricken oder fasrigem Material aufweist, wobei die einzelnen Lagen (1) und deren Bestandteile (2) mit aufgesinterten pulverförmigen oder körnigen Partikeln, Spänen oder Drahtstücken (3) versehen sind, die derart gezielt aufgebracht sind, daß der Filter- oder Katalysatorkörper eine unterschiedliche Porosität und einen unterschiedlichen Durchflußwiderstand besitzt.

10. Filter- oder Katalysatorkörper nach Anspruch 9, **dadurch gekennzeichnet,** daß die Gewebe, Gestricke oder das fasrige Material (1) aus Metall und die Partikel, Späne oder Drahtstücke (3) aus Metall, Kunststoff, Keramik oder Mischungen davon bestehen.

11. Filter- oder Katalysatorkörper nach Anspruch 9, **dadurch gekennzeichnet,** daß die Gewebe, Gestricke oder das fasrige Material (1) aus Kunststoff und die Partikel, Späne oder Drahtstücke (3) aus Metall, Kunststoff, Keramik oder Mischungen davon bestehen.

12. Filter- oder Katalysatorkörper nach Anspruch 9, **dadurch gekennzeichnet,** daß die Gewebe, Gestricke oder das fasrige Material (1) aus Keramik und die Partikel, Späne oder Drahtstücke (3) aus Metall, Kunststoff, Keramik oder Mischungen davon bestehen.

## Claims

1. Process for manufacturing the body of a filter or a catalyst from sintered material, pulverulent or granular particles (3) being sintered on to the material, the body of the filter or catalyst being formed of multi-layer woven fabrics and/or knitted fabrics and/or fibrous material and/or wire, the pulverulent or granular particles or chips, wire pieces or mixtures thereof (3) being sintered on to the individual layers (1) or components (2) thereof and the individual layers being provided with the pulverulent or granular particles or chips, wire pieces or mixtures thereof in a targeted manner such that the body of a filter or a catalyst having varying porosity and thus varying flow resistance can be manufactured therewith.

2. Process according to claim 1, characterised in that the individual layers (1) are sintered together and the particles, chips or wire pieces (3) are sintered on in one single step.

3. Process according to claim 1 or claim 2, characterized in that the woven fabric, knitted fabric or fibrous material (1) is coated with a sticky fluid, then is provided with the particles, chips or wire pieces (3) and finally is sintered.

4. Process according to one of claims 1 to 3, characterised in that the particles, chips or wire pieces (3) are shaken into the woven fabric, knitted fabric or fibrous material (1).

5. Process according to one of claims 1 to 4, characterised in that the woven fabric, knitted fabric or fibrous material (1) is electrically and/or magnetically charged and is then provided with particles, chips or wire pieces (3).

6. Process according to claim 1 or claim 2, characterised in that the particles, chips or wire pieces (3) are applied to the individual layers (1) by silk-screen printing.

7. Process according to one of claims 1 to 6, characterised in that metal, plastic or ceramics or a combination of these materials is used for the woven fabric, knitted fabric or fibrous material (1).

8. Process according to one of claims 1 to 7, characterised in that metals, plastics, ceramic materials or mixtures thereof are used as the particles, chips or wire pieces (3).

9. Body of a filter or a catalyst having a plurality of layers of woven fabric, knitted fabric or fibrous material sintered together, the individual layers (1) and their components (2) being provided with sintered pulverulent or granular particles, chips or wire pieces (3), which are applied in a targeted manner such that the body of the filter or catalyst has varying porosity and varying flow resistance.

10. Body of a filter or a catalyst according to claim 9, characterised in that the woven fabric, knitted fabric or fibrous material (1) consists of metal and the particles, chips or wire pieces (3) consist of metal, plastic, ceramics or mixtures thereof.

11. Body of a filter or a catalyst according to claim 9, characterised in that the woven fabric, knitted fabric or fibrous material (1) consists of plastic and the particles, chips or wire pieces (3) consist of metal, plastic, ceramics or mixtures thereof.

12. Body of a filter or a catalyst according to claim 9, characterised in that the woven fabric, knitted fabric or fibrous material (1) consists of ceramics and the particles, chips or wire pieces (3) consist of metal, plastic, ceramics or mixtures thereof.

## Revendications

1. Procédé de fabrication d'un corps de filtre ou de catalyseur en matériau aggloméré par frittage, où des particules (3) en poudre ou en grains sont liées par frittage au matériau, où le corps de filtre ou de catalyseur comporte plusieurs couches de tissus et/ou de tricots et/ou de matériau fibreux et/ou de fils métalliques, où les particules en poudre ou en grains ou des copeaux, des morceaux de fils ou des mélanges de ceux-ci (3) sont liés par frittage aux diverses couches (1) ou à des composants (2) de celles-ci et où la dotation des diverses couches en particules en poudre ou en grains, ou en copeaux, en morceaux de fils ou en mélanges de ceux-ci est effectuée de manière sélective pour produire ainsi un corps de filtre ou de catalyseur ayant une porosité différenciée et donc une résistance différenciée au passage d'un écoulement.

2. Procédé selon la revendication 1, **caractérisé** en ce que les diverses couches (1) sont frittées ensemble, en une seule opération en même temps que la liaison par frittage des particules, copeaux ou morceaux de fils (3).

3. Procédé selon la revendication 1 ou 2, **caractérisé** en ce que les tissus, les tricots ou le matériau fibreux (1) sont enduits d'un liquide collant, sont ensuite dotés des particules, copeaux ou morceaux de fils (3) et sont ensuite frittés.

4. Procédé selon l'une des revendications 1 à 3, **caractérisé** en ce que les particules copeaux ou morceaux de fils (3) sont introduits au moyen de secousses dans les tissus, les tricots ou le matériau fibreux (1).

5. Procédé selon l'une des revendications 1 à 4, **caractérisé** en ce que les tissus, les tricots ou le matériau fibreux (1) sont chargés électriquement et/ou magnétiquement et sont ensuite dotés de particules copeaux ou morceaux de fils (3).

6. Procédé selon la revendication 1 ou 2 **caractérisé** en ce que les particules copeaux ou morceaux de fils (3) sont appliqués sur les diverses couches (1) par sérigraphie.

7. Procédé selon l'une des revendications 1 à 6, **caractérisé** par l'utilisation de métal, de matière synthétique ou de céramique ou d'une combinaison de ces matériaux pour constituer les tissus, les tricots ou le matériau fibreux (1).

8. Procédé selon l'une des revendications 1 à 7, **caractérisé** par l'utilisation de métaux de matières synthétiques de matières céramiques ou de mélanges de ceux-ci pour constituer les particules, copeaux ou morceaux de fils (3).

9. Corps de filtre ou de catalyseur, comportant plusieurs couches mutuellement agglomérées par frittage de tissus, de tricots ou de matériau fibreux, où les diverses couches (1) et leurs composants (2) sont pourvus de particules en poudre ou en grains de copeaux ou de morceaux de fils (3) qui sont liés par frittage et sont disposés sélectivement de telle manière que le corps de filtre ou de catalyseur présente une porosité différenciée et une résistance différenciée au passage d'un écoulement.

10. Corps de filtre ou de catalyseur selon la revendication 9, **caractérisé** en ce que les tissus, les tricots ou le matériau fibreux (1) sont en métal et en ce que les particules, copeaux ou morceaux de fils (3) sont en métal en matière synthétique en céramique ou en mélanges de ces matières.

11. Corps de filtre ou de catalyseur selon la revendication 9, **caractérisé** en ce que les tissus les tricots ou le matériau fibreux (1) sont en matière synthétique et en ce que les particules, copeaux ou morceaux de fils (3) sont en métal, en matière synthétique, en céramique ou en mélanges de ces matières.

12. Corps de filtre ou de catalyseur selon la revendication 9, **caractérisé** en ce que les tissus les tricots ou le matériau fibreux (1) sont en céramique et en ce que les particules copeaux ou morceaux de fils (3) sont en métal, en matière synthétique, en céramique ou en mélanges de ces matières.
